# EUROPÄISCHE PATENTSCHRIFT

(11) **EP 3 353 100 B1**
(45) Veröffentlichungstag und Bekanntmachung des Hinweises auf die Patenterteilung: **23.02.2022**
(21) Anmeldenummer: 16774895.3
(22) Anmeldetag: 22.09.2016
(51) Int. Cl.: B65G 47/82, B65G 1/137

(54) **WARENAUFZUG FÜR EINE WARENÜBERGABEVORRICHTUNG EINES AUTOMATISCHEN WARENLAGERS**
GOODS ELEVATOR FOR A GOODS TRANSFER DEVICE OF AN AUTOMATIC WAREHOUSE
MONTE-CHARGE POUR DISPOSITIF DE TRANSFERT DE MARCHANDISES D'UN ENTREPÔT AUTOMATISÉ

(30) Priorität: 24.09.2015 DE 102015218381
(43) Veröffentlichungstag der Anmeldung: 01.08.2018
(73) Patentinhaber: Gebr. Willach GmbH, 53809 Ruppichteroth (DE)
(72) Erfinder: MÜLLER, Hans-Friedrich, 53809 Ruppichteroth (DE); MÜLLER, Matthias, 53809 Ruppichteroth (DE); SCHMITZ, Stefan, 53819 Neunkirchen-Seelscheid (DE); LINGSLEBE, Tanja, 53809 Ruppichteroth (DE); SCHMITT, Werner, 53809 Ruppichteroth (DE); WILLACH, Jens, 53783 Eitorf (DE)
(74) Vertreter: dompatent von Kreisler Selting Werner - Partnerschaft von Patent- und Rechtsanwälten mbB
(86) Internationale Anmeldenummer: PCT/EP2016/072557
(87) Internationale Veröffentlichungsnummer: WO 2017/050906

(56) Entgegenhaltungen:
- EP-A1- 2 639 188
- EP-A2- 0 450 556
- GB-A- 1 048 794
- US-A- 4 281 954

## Beschreibung

Die vorliegende Erfindung betrifft eine Beladevorrichtung für eine Warenübergabevorrichtung eines automatischen Warenlagers, sowie eine Warenübergabevorrichtung eines automatischen Warenlagers und ein automatisches Warenlager.

Es ist bekannt, dass Lagerflächen, wie beispielsweise Kanallager mit Lagerkanälen, über einen Manipulator befüllt werden. Dabei wird das Eingabeende der Lagerfläche von dem Manipulator angefahren und die Gegenstände werden an die Lagerplätze übergeben. Derartige Lager werden häufig für Waren, beispielsweise Medikamente in Apotheken, eingesetzt. Besonders geeignet für sogenannte schnelldrehende Waren sind Schrägfachbodenregale, bei denen die einzelnen Waren in Kanälen, die durch seitliche Begrenzung getrennt sind, auf einer Lagerfläche, die gegenüber einer Horizontalen geneigt ist, enthalten sind. Bei Entnahme eines unteren Gegenstandes rutschen die übrigen Gegenstände nach. In der Regel sind in jedem Kanal gleichartige Gegenstände enthalten. Die Gegenstände weisen beispielsweise quaderförmige Packungen auf, wobei Packungen gleichen Formats in einem Kanal eingebracht werden, dessen Kanalbreite auf die Packungsgröße abgestimmt ist. Auf derartigen Lagerflächen können jedoch auch Waren unterschiedlicher Form, z.B. Zylinder, und unterschiedlichen Formats innerhalb desselben Kanals gespeichert werden. Ein automatisches Lager mit umlaufenden Lagerplätzen ist aus EP2639188A1 bekannt.

Üblicherweise befüllen Manipulatoren die Lagerplätze, sobald eine vorgegebene Anzahl von Waren aus einem Lagerkanal entnommen worden ist. Dazu wird ein Manipulator mit mehreren der nachzufüllenden Gegenstände befüllt und der Manipulator fährt das Eingabeende der entsprechenden Lagerfläche an, um die Gegenstände zu übergeben.

Um die Nachfüllfunktion der Lagerflächen auf zuverlässige Weise zu gewährleisten, muss sichergestellt werden, dass die Manipulatoren geordnet mit den einzulagernden Gegenständen befüllt werden. Da bekannte Manipulatoren mit einer sehr hohen Geschwindigkeit innerhalb eines Lagers bewegt werden, ist eine manuelle Bestückung der Manipulatoren mit einem großen Sicherheitsrisiko verbunden. Daher werden Übergabevorrichtungen verwendet, in die die Gegenstände manuell oder automatisch eingelegt werden. Die Manipulatoren übernehmen die einzulagernden Gegenstände von der Übergabevorrichtung, um anschließend den vorgegebenen Lagerplatz anzufahren.

In der Praxis wird häufig eine sehr schnelle Befüllung eines Lagers gefordert. Daher werden zumeist gleichartige Gegenstände von dem Manipulator gleichzeitig transportiert. Um eine schnelle Befüllung des Manipulators zu ermöglichen, werden daher in einer Übergabevorrichtung die von einem Manipulator zu transportierenden Gegenstände für einen kurzen Zeitraum gelagert.

Die Anmelderin hat daher verschiedene Warenübergabevorrichtungen entwickelt, die beispielsweise unter dem Aktenzeichen DE 10 2013 218 538 oder DE 10 2014 208 405 zum Patent angemeldet sind. Diese Warenübergabevorrichtungen werden manuell bedient, wobei zumeist darauf geachtet werden muss, dass in einem Übergabekanal gleichartige Waren eingelegt werden. Durch die manuelle Bedienung muss bei den vorbekannten Warenübergabevorrichtungen stets ein Benutzer vor Ort anwesend sein, wobei dieser je nach Speicherkapazität der Übergabekanäle und Art der eingelegten Waren teilweise mehrere Minuten freie Zeit hat, bis wieder Ware in einen Übergabekanal eingefüllt werden muss. Wann jedoch eine Befüllung der Übergabekanäle wieder erfolgen muss, ist nur schwierig voraussehbar, so dass der Benutzer an der Übergabevorrichtung verweilen sollte. Die bekannten Übergabevorrichtungen sind direkt an den Warenlagern angeordnet. Die Warenanlieferung erfolgt jedoch zumeist an einer von dem Warenlager unterschiedlichen Position, so dass die Ware vor der Einlagerung noch von einer anderen Person zu der Übergabevorrichtung gebracht werden muss.

DE 10 2014 208 405 sieht eine Beladevorrichtung vor, die in Form von Stapelkanälen an der Warenübergabevorrichtung angeordnet ist. Hierbei müssen jedoch die Gegenstände als Stapel relativ geordnet eingegeben werden.

Bei größeren Warenlagern mit einem hohen Durchsatz an Waren ist es häufig notwendig, Waren mit einer hohen Geschwindigkeit, z.B. bei in Form von Warenpackungen mehrerer Packungen innerhalb kurzer Zeit, z.B. 20 Packungen und mehr pro Minute, einzugeben. Bei derartigen Lagern ist eine manuelle Eingabe häufig schwierig.

In bekannten Vorrichtungen zur Behandlung von Waren, wie beispielsweise Vorrichtungen eines Warenlagers, ist es bekannt, Warenaufzüge vorzusehen, um Waren von einem Höhenniveau auf ein höher gelegenes Höhenniveau zu transportieren. Dadurch wird beispielsweise ermöglicht, dass bei Warenausgaben Waren auf einfache Art und Weise über eine Rutsche ausgegeben werden können. Derartige Warenaufzüge sind auch in Warenübergabevorrichtungen einsetzbar.

Grundsätzlich besteht bei Vorrichtungen zur Handhabung von Waren die Schwierigkeit, wenn die Waren ungeordnet beispielsweise als Schüttungen vorliegen. Dabei besteht eine besondere Herausforderung darin, die Waren zu ordnen, so dass sie in vorteilhafter Weise für Vorrichtungen handhabbar sind und darüber hinaus Portionierungen von Waren vorzunehmen, so dass Aufnahmevolumen einzelner Vorrichtungen, wie beispielsweise das Aufnahmevolumen eines Warenaufzuges, nicht überschritten werden. Ein Warenaufzug mit den Merkmalen des Oberbegriffs des Anspruch 1 ist aus EP0450556A2 bekannt. Ein weiterer Warenaufzug ist in GB1,048,794 offenbart, welcher die Merkmale des Oberbegriffs des Anspruchs 1 offenbart.

Es ist daher die Aufgabe der vorliegenden Erfindung, einen Warenaufzug eines automatischen Warenlagers, der insbesondere für eine Warenübergabevorrichtung geeignet sein kann, zu verbessern.

Der erfindungsgemäße Warenaufzug ist definiert durch die Merkmale des Anspruchs 1.

Die erfindungsgemäße Warenübergabevorrichtung ist definiert durch die Merkmale des Anspruchs 12.

Das erfindungsgemäße automatische Warenlager ist definiert durch die Merkmale des Anspruchs 14.

Der erfindungsgemäße Warenaufzug für eine Warenübergabevorrichtung eines automatischen Warenlagers zur Aufnahme von Waren von einer Fördervorrichtung der Warenübergabevorrichtung und Übergabe an eine vorzugsweise oberhalb der Fördervorrichtung angeordnete Handhabungsvorrichtung der Warenübergabevorrichtung weist einen Fahrkorb mit einem Fahrkorbboden zum Transport der Waren und eine Fahrkorbführung auf. Der Warenaufzug ist dadurch gekennzeichnet, dass ein Schieber an einer Öffnung in der Fahrkorbführung angeordnet ist, über den auf der Fördervorrichtung angeordnete Waren in den in einer ersten Endstellung positionierten Fahrkorb schiebbar sind.

Mittels des Schiebers sind somit auf einfache Art und Weise Waren, die auf der Fördervorrichtung angeordnet sind, durch die Öffnung in der Fahrkorbführung in den Fahrkorb beförderbar. Die Waren auf der Fördervorrichtung werden mittels des Schiebers aktiv bewegt, so dass gesteuert werden kann, zu welchem Zeitpunkt Waren in den Fahrkorb eingeladen werden.

Erfindungsgemäß ist vorgesehen, dass der Schieber in einer geschlossenen Stellung des Schiebers die Öffnung in der Fahrkorbführung zumindest teilweise verschließt. Dadurch kann sichergestellt werden, dass in der geschlossenen Stellung des Schiebers keine weiteren Waren von der Fördervorrichtung in den Fahrkorb gelangen können. Ferner kann durch den Schieber sichergestellt werden, dass sämtliche in einem Teilbereich der Fördervorrichtung befindlichen Waren zuverlässig in den Fahrkorb geschoben sind, so dass ein Verkanten von Waren bei einem Betrieb des Fahrkorbs weitestgehend vermieden werden kann.

Der Warenaufzug weist vorzugsweise eine Sperreinrichtung auf, die eine Förderbewegung des Fahrkorbs bei geöffneter Stellung des Schiebers verhindert oder beschränkt. Dadurch wir ein Verletzungsrisiko des Benutzers bei der Wartung oder Reparatur reduziert. Die Sperreinrichtung kann beispielsweise durch Scharniere des Schiebers gebildet sein, die in der geöffneten Stellung des Schiebers über den Fahrkorbboden ragen.

In einer bevorzugten Ausführungsform des erfindungsgemäßen Warenaufzugs kann vorgesehen sein, dass der Schieber in einer geöffneten Stellung des Schiebers eine Führungswand von der Fördervorrichtung geförderten Waren bildet. Mit anderen Worten: Waren, die mittels der Fördervorrichtung gefördert werden, werden von dem Schieber in der geöffneten Stellung durch die Öffnung in der Fahrkorbführung in den Fahrkorb geleitet. Beispielsweise nach einer vorgegebenen Zeit oder einer vorgegebenen Warenmenge kann dann der Schieber von der geöffneten Stellung in die geschlossene Stellung verfahren werden, wobei die restlichen in einem Teilstück der Fördervorrichtung befindlichen Waren mittels des Schiebers in den Fahrkorb geschoben werden.

Vorzugsweise ist vorgesehen, dass der Schieber in einer geschlossenen Stellung des Schiebers einen Anschlag für die von der Fördervorrichtung geförderten Waren bildet. Die Fördervorrichtung kann somit in der geschlossenen Stellung des Schiebers weiter betrieben werden und eventuell von der Fördervorrichtung geförderte Waren werden von dem durch den Schieber gebildeten Anschlag aufgehalten. Bei einem anschließenden Öffnen des Schiebers können diese dann in den Fahrkorb befördert werden.

Bei einer Warenübergabevorrichtung mit dem erfindungsgemäßen Warenaufzug kann grundsätzlich vorgesehen sein, dass die Fördervorrichtung für einen vorgegebenen Zeitraum ausschließlich eine Warenmenge transportiert, die von dem Fahrkorb aufgenommen werden kann, so dass während des Betriebs des Fahrkorbs die Fördervorrichtung keine Waren transportiert. Durch den Anschlag, der durch den Schieber in der geschlossenen Stellung gebildet wird, kann jedoch sichergestellt werden, dass auch bei einer Fehlfunktion die Fördervorrichtung weiter betrieben werden kann, ohne dass es zu Verkantungen von Waren kommen kann.

Der Anschlag kann auch eine Leitfunktion ausüben, so dass Waren, die bei geschlossenem Schieber von der Fördervorrichtung befördert werden, von dem Anschlag in einen Warenbypass geleitet werden können, über den die Waren beispielsweise der Fördervorrichtung wieder zugeführt werden können.

Der erfindungsgemäße Warenaufzug ist insbesondere für Waren in Form von Warenverpackungen, wie beispielsweise Medikamentenverpackungen, geeignet, die beispielsweise als Schüttgut einer Warenübergabevorrichtung zugeführt werden.

Bei dem erfindungsgemäßen Warenaufzug kann vorgesehen sein, dass die Fahrkorbführung einen Aufzugsschacht aufweist, der durch mindestens zwei gegenüberliegende erste Wände gebildet ist, wobei die Öffnung zwischen den ersten Wänden gebildet ist. Eine derartige Fahrkorbführung hat sich als besonders vorteilhaft herausgestellt, da ein seitlicher Zugriff auf den Fahrkorb durch die ersten Wände verhindert werden kann. Ferner kann die gewünschte Öffnung, durch die die Waren dem Fahrkorb zugeführt werden, auf einfache Art und Weise gebildet sein. Ferner ist die der ersten Öffnung gegenüberliegende Seite ebenfalls geöffnet, so dass ein Zugriff beispielsweise zu Wartungszwecken auf einfache Art und Weise geschafft werden kann.

Alternativ kann vorgesehen sein, dass die Fahrkorbführung einen Aufzugsschacht aufweist, der durch zwei gegenüberliegende erste Wände und eine die ersten Wände verbindende zweite Wand gebildet ist, wobei die Öffnung in der zweiten Wand angeordnet ist. Die Öffnung ist somit fensterartig in der zweiten Wand ausgebildet. Eine derartige Fahrkorbführung weist ebenfalls die zuvor genannten Vorteile auf. Ferner kann durch die ersten Wände und die zweite Wand auch eine Führungsfunktion für in dem Fahrkorb aufgenommene Waren ausgeübt werden, so dass sichergestellt wird, dass während der Betätigung des Fahrkorbs keine Waren aus dem Fahrkorb herausfallen können.

Vorzugsweise ist vorgesehen, dass der Schieber eine Platte aufweist, die in der geschlossenen Stellung des Schiebers die Öffnung in der Fahrkorbführung zumindest teilweise verschließt. Eine derartige Ausbildung des Schiebers ermöglicht auf konstruktiv einfache Art und Weise, dass einerseits die Waren in vorteilhafter Weise mittels des Schiebers verschoben werden können und andererseits die Öffnung in der Fahrkorbführung auf vorteilhafte Weise verschlossen werden kann.

Dabei kann vorgesehen sein, dass in der geschlossenen Stellung des Schiebers die Platte mit der zweiten Wand fluchtet, wobei die Platte an ihrem oberen Seitenrand eine erste Abkantung in Richtung des Innenraums des Aufzugsschachts und/oder an ihrem unteren Seitenrand eine zweite Abkantung in von dem Innenraum des Aufzugsschachts abgewandter Richtung aufweist. Die Platte fluchtet mit ihrer Hauptfläche mit der zweiten Wand, so dass in dem Fahrkorb transportierte Waren von der zweiten Wand und der Platte geführt werden können. Die erste Abkantung in Richtung des Innenraums des Aufzugsschachts am oberen Seitenrand der Platte sorgt dafür, dass Waren, die entlang der Platte bei der Bewegung des Aufzugkorbs schleifen, nach innen gedrückt werden und somit an dem oberhalb des oberen Seitenrands der Platte angeordneten oberen Öffnungsrand der Öffnung vorbeigeführt werden, ohne dass die Gefahr besteht, dass die Waren an dem oberen Öffnungsrand hängenbleiben und verkanten. Die zweite Abkantung an dem unteren Rand der Platte sorgt dafür, dass durch die Platte kein Rand gebildet wird, an dem die Waren hängenbleiben können, da mittels der zweiten Abkantung der untere Seitenrand der Platte weiter außerhalb des Innenraums angeordnet ist als der untere Öffnungsrand der Öffnung. Die erste und die zweite Abkantung gewährleisten somit, dass Hindernisse, an die die Waren während des Transports mittels des Fahrkorbs anstoßen können, wodurch ein Verkanten der Waren erfolgen könnte, vermieden werden. Alternativ zu der ersten und/oder zweiten Abkantung kann die Platte auch eine schräge Anordnung aufweisen, so dass die Platte in vertikaler Richtung leicht schräg in den Innenraum des Aufzugsschachts hineinragt.

Vorzugsweise ist vorgesehen, dass der Schieber über einen Antrieb antreibbar ist. Beispielsweise kann der Schieber mittels eines Kolbenantriebs angetrieben werden. In dem Kolbenantrieb kann ein Positionssensor angeordnet sein, über den die Position des Schiebers detektierbar ist. Durch den Antrieb kann der Schieber automatisch betrieben werden. Beispielsweise kann der Schieber nach einem Signal, dass auf der Fördervorrichtung Waren transportiert werden, nach einer vorgegebenen Zeitspanne in die geschlossene Stellung bewegt werden. Über den Positionssensor kann dann festgestellt werden, dass der Schieber in einer geschlossenen Stellung angeordnet ist, so dass ein Signal erzeugt werden kann, dass ein Betrieb des Fahrkorbs möglich ist.

In einer besonders bevorzugten Ausführungsform ist vorgesehen, dass der Fahrkorb eine Seitenwand aufweist, wobei die Seitenwand auf der von der Öffnung der Fahrkorbführung abgewandten Seite des Fahrkorbbodens angeordnet ist. Der Fahrkorb kann somit L-förmig ausgebildet sein. Ein derartiger Fahrkorb ist besonders kostengünstig herstellbar. Insbesondere in Verbindung mit einem Aufzugsschacht mit zwei ersten Wänden und einer zweiten Wand hat sich ein derartiger Fahrkorb als besonders vorteilhaft herausgestellt, da die ersten Wände und die zweite Wand des Aufzugsschachts eine Führungsfunktion für die auf dem Fahrkorbboden des Fahrkorbs angeordneten Waren ausüben können. Die Seitenwand des Fahrkorbs ist auf der Seite des Aufzugsschachts angeordnet, die für Wartungszwecke geöffnet ist. Somit wird sichergestellt, dass keine in dem Fahrkorb geladenen Waren während des Transports aus diesem herausfallen können. Das Vorsehen von lediglich einer Seitenwand des Fahrkorbs ermöglicht darüber hinaus eine vorteilhafte Entladung des Fahrkorbs, da drei Seiten des Fahrkorbs offen zugänglich sind.

Vorzugsweise ist vorgesehen, dass der erfindungsgemäße Warenaufzug einen zweiten Schieber aufweist, über den in einer zweiten Endstellung des Fahrkorbs Waren zur Übergabe an die Handhabungsvorrichtung schiebbar sind. Eine derartige Ausgestaltung des Warenaufzugs ermöglicht eine besonders vorteilhafte Entladung des Fahrkorbs, da in der zweiten Endstellung des Fahrkorbs die Waren mittels des zweiten Schiebers auf einfache Art und Weise von dem Fahrkorbboden geschoben werden können.

Mittels des zweiten Schiebers wird somit eine vollständige Entleerung des Fahrkorbs sichergestellt.

Ein Warenaufzug mit einem zweiten Schieber, über den in einer zweiten Endstellung des Fahrkorbs Waren zur Übergabe an die Handhabungsvorrichtung schiebbar sind, hat auch eigenständige erfinderische Bedeutung. Somit ist auch ein Warenaufzug für eine Warenübergabevorrichtung eines automatischen Warenlagers zur Aufnahme von Waren von einer Fördervorrichtung der Warenübergabevorrichtung zur Übergabe an eine vorzugsweise oberhalb der Fördervorrichtung angeordnete Handhabungsvorrichtung der Warenübergabevorrichtung mit einem Fahrkorb mit einem Fahrkorbboden zum Transport der Waren mit einer Fahrkorbführung vorgesehen, bei dem über einen Schieber in einer zweiten Endstellung des Fahrkorbs Waren zur Übergabe an die Handhabungsvorrichtung schiebbar sind. Eine derartige Ausgestaltung des Warenaufzugs ist insbesondere mit einem L-förmigen Fahrkorbboden verwendbar.

Der zweite Schieber kann kontinuierlich mit einer vorgegebenen Geschwindigkeit oder stufenweise betrieben werden. Über eine kontinuierliche Bewegung der Schiebeplatte kann eine grobe Vereinzelung der Waren bei der Übergabe an die Handhabungsvorrichtung erreicht werden. Durch eine stufenweise Bewegung der Schiebeplatte kann eine Portionierung der Waren erreicht werden.

Vorzugsweise ist vorgesehen, dass der zweite Schieber eine über den Fahrkorbboden bewegbare Schiebeplatte aufweist. Die Schiebeplatte kann beispielsweise durch eine Seitenwand des Fahrkorbs, eine zusätzliche Seitenwand des Fahrkorbs oder separat ausgebildet sein. Die separate Ausbildung des Schiebers mit Schiebeplatte hat den Vorteil, dass somit die beweglichen Teile der Schiebeplatte nicht mit dem Fahrkorb mitgeführt werden müssen, was zu einer Gewichtsersparnis des Fahrkorbes führt. Eine mit dem Fahrkorbboden mitgeführte Schiebeplatte hat den Vorteil, dass es nicht zu Verkantungen mit dem Fahrkorbboden kommen kann, wenn der Fahrkorb nicht vollständig in seine zweite Endstellung verfahren ist.

Der erfindungsgemäße Warenaufzug kann grundsätzlich in Warenübergabevorrichtungen vorgesehen sein, die eine Funktion einer Annahme der Waren und Übergabe an ein Warenlager ausführen. Der erfindungsgemäße Warenaufzug kann beispielsweise auch in Warenübergabevorrichtungen eingesetzt werden, die an einer Ausgabeseite eines Warenlagers angeordnet sind. Auszugebende Waren werden dabei mit dem Fahrkorb zur Ausgabeseite befördert und zur endgültigen Ausgabe aus dem Warenlager beispielsweise mittels des zweiten Schiebers geschoben.

Die Erfindung betrifft ferner eine Warenübergabevorrichtung mit einem erfindungsgemäßen Warenaufzug. Eine derartige Warenübergabevorrichtung ist zur Übergabe von Waren an ein automatisches Warenlager besonders geeignet, dadurch dass durch das Vorsehen des erfindungsgemäßen Warenaufzugs Waren innerhalb der Warenübergabevorrichtung auf besonders vorteilhafte Weise gehandhabt werden können.

Die erfindungsgemäße Warenübergabevorrichtung nimmt Waren beispielsweise von einer Beladevorrichtung an und übergibt sie beispielsweise an einen Manipulator des Warenlagers. Die erfindungsgemäße Warenübergabevorrichtung hat somit eine Annahme- und Übergabefunktion, die insbesondere automatisch erfolgen kann. Typische Warenlager sind Apothekenlager, in denen Medikamente und andere Apothekenprodukte in Schachteln verpackt als Waren gelagert werden. Die erfindungsgemäße Warenübergabevorrichtung kann beispielsweise eine Sortierfunktion aufweisen, so dass die Waren, beispielsweise die Warenpackungen, unsortiert von der Warenübergabevorrichtung gehandhabt werden können.

Die erfindungsgemäße Warenübergabevorrichtung weist vorzugsweise eine Warenannahmeeinrichtung auf, wobei die Fördervorrichtung Waren von der Warenannahmeeinrichtung zu dem Warenaufzug befördert. Die Fördervorrichtung kann beispielsweise ein Förderband sein.

Bei der erfindungsgemäßen Warenübergabevorrichtung kann vorgesehen sein, dass die Handhabungsvorrichtung eine Warenvereinzelungsvorrichtung ist. Beispielsweise kann die Warenvereinzelungsvorrichtung eine Drehtrommel sein. Durch die erfindungsgemäße Warenübergabevorrichtung ist somit eine Übergabe der Waren aus dem Warenaufzug auf die Warenvereinzelungsvorrichtung in vorteilhafter Weise möglich. Bei der Ausbildung der Warenvereinzelungsvorrichtung als Drehtrommel können Waren, die aus dem Fahrkorb ausgeladen werden, in vorteilhafter Weise schwerkraftbedingt befördert und vereinzelt werden.

Häufig sind Warenübergabevorrichtungen räumlich begrenzt. Um in die Warenübergabevorrichtung eingegebene Waren sortieren zu können und sie für die Übergabe an den Manipulator zu vereinzeln, kann die erfindungsgemäße Warenübergabevorrichtung mehrere Handhabungsvorrichtungen aufweisen. Aufgrund des begrenzten Platzangebots der Warenübergabevorrichtung können daher verschiedende Handhabungsvorrichtungen in der Höhe auf verschiedenen Ebenen vorgesehen sein, wobei eine Beförderung mittels des erfindungsgemäßen Warenaufzugs erfolgen kann. Um Waren von beispielsweise einer Fördervorrichtung auf eine oberhalb der Fördervorrichtung angeordnete Handhabungsvorrichtung zu transportieren, weist die erfindungsgemäße Warenübergabevorrichtung einen erfindungsgemäßen Warenaufzug auf.

Die Erfindung betrifft ferner ein Warenlager mit einer erfindungsgemäßen Warenübergabevorrichtung.

Im Folgenden wird unter Bezugnahme auf die nachfolgenden Figuren die Erfindung näher erläutert.

Es zeigen:
Figur 1 eine schematische perspektivische Ansicht eines erfindungsgemäßen automatischen Warenlagers mit einer erfindungsgemäßen Warenübergabevorrichtung mit einem erfindungsgemäßen Warenaufzug,
Figur 2 eine schematische perspektivische Ansicht eines erfindungsgemäßen Warenaufzugs mit einer Fördervorrichtung der Warenübergabevorrichtung,
Figur 3 eine schematische Schnittdarstellung des erfindungsgemäßen Warenaufzugs,
Figur 4 eine schematische perspektivische Ansicht des erfindungsgemäßen Warenaufzug mit daran angeordneter erster Fördervorrichtung der erfindungsgemäßen Warenübergabevorrichtung und
Figur 5 eine schematische Ansicht des oberen Bereiches des erfindungsgemäßen Warenaufzugs mit Aufzugkorb in einer oberen Position.

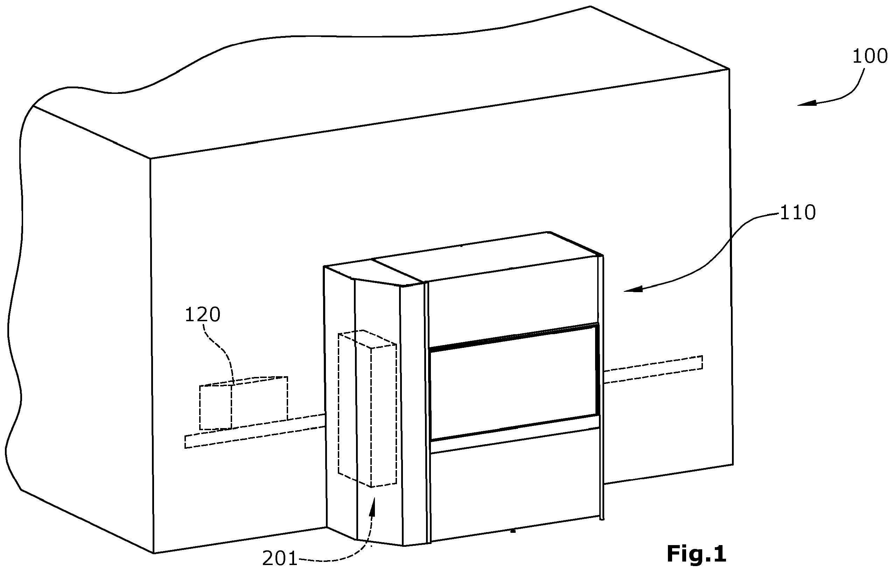

In Fig. 1 ist ein erfindungsgemäßes automatisches Warenlager 100 mit einer erfindungsgemäßen Warenübergabevorrichtung 110 schematisch dargestellt. In die erfindungsgemäße Warenübergabevorrichtung 110 können Waren eingegeben werden, die an einen in Fig. 1 lediglich angedeuteten Manipulator 120 übergeben werden, der Waren in nicht dargestellte Lagerplätze, wie beispielsweise Lagerkanäle, einsortieren kann. Das automatische Warenlager 100 kann beispielsweise ein Apothekenlager sein, in das Medikamente und andere Apothekenprodukte, die als Warenpackungen, die beispielsweise in Schachteln verpackt sind, eingelagert werden. Die erfindungsgemäße Warenübergabevorrichtung 110 nimmt dabei die Waren automatisch an und übergibt sie dem Manipulator 120. Die erfindungsgemäße Warenübergabevorrichtung 110 kann beispielsweise eingegebene Waren sortieren und in einem Zwischenpuffer für die Übergabe an den Manipulator 120 bereit halten.

Wie aus Fig. 1 hervorgeht, ist die Warenübergabevorrichtung 110 im Vergleich zum Warenlager 100 räumlich begrenzt ausgebildet. Um in die Warenübergabevorrichtung 110 eingegebene Waren sortieren zu können und sie für die Übergabe an den Manipulator 120 zu vereinzeln, weist die Warenübergabevorrichtung 110 mehrere Handhabungsvorrichtungen auf. Aufgrund des begrenzten Platzangebots der Warenübergabevorrichtung 110 werden daher verschiedende Handhabungsvorrichtungen in der Höhe auf verschiedenen Ebenen vorgesehen. Um Waren von beispielsweise einer Fördervorrichtung auf eine oberhalb der Fördervorrichtung angeordnete Handhabungsvorrichtung zu transportieren, weist die Warenübergabevorrichtung 110 daher einen erfindungsgemäßen Warenaufzug 201 auf.

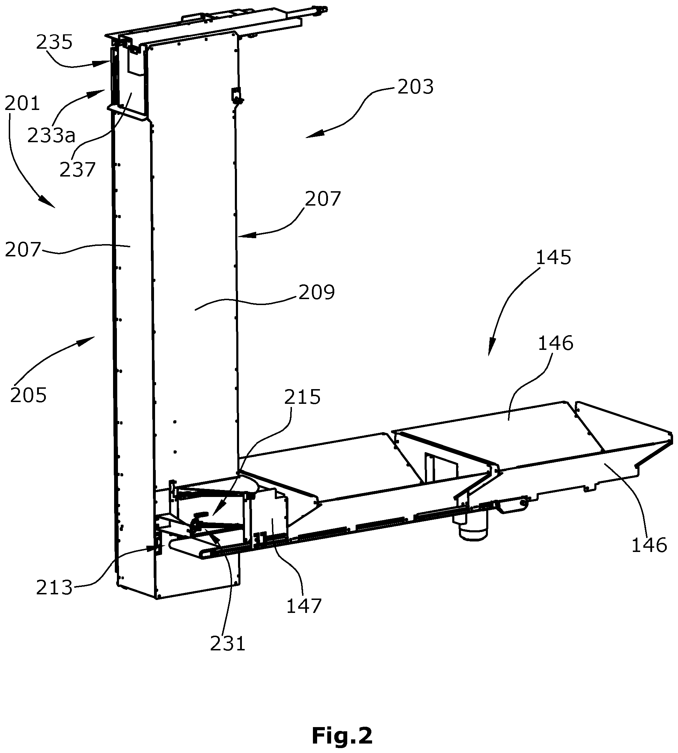

Der erfindungsgemäße Warenaufzug 201 ist in der Fig. 2 schematisch in einer perspektivischen Darstellung gezeigt. Zu dem erfindungsgemäßen Warenaufzug 201 führt die Fördervorrichtung 145 der Warenübergabevorrichtung 110. Die Fördervorrichtung 145 kann als Förderband ausgebildet sein. Seitlich des Förderbandes sind schräg verlaufende Wände 146 angeordnet, die eine Art Trichter für das Förderband bilden, so dass Waren, die in die Warenübergabevorrichtung 110 eingegeben werden, in zuverlässiger Weise auf das Förderband fallen können.

Der Warenaufzug 201 weist eine Fahrkorbführung 203 auf, die einen Aufzugsschacht 205 aufweist. Der Aufzugsschacht 205 ist durch zwei gegenüberliegende erste Wände 207 und eine die ersten Wände 207 verbindende zweite Wand 209 gebildet. Die Fahrkorbführung 203 weist ferner eine in Fig. 2 nicht dargestellte Schienenführung für den Fahrkorb auf, mittels der der Fahrkorb antreibbar ist.

An einem unteren Bereich des Aufzugsschachts 205 ist eine Öffnung 213 fensterartig in der zweiten Wand 209 gebildet, durch die mittels eines Schiebers 215 Waren, die auf der Fördervorrichtung 145 transportiert werden, in den Aufzugsschacht 205 und somit in den nicht dargestellten Fahrkorb befördert werden.

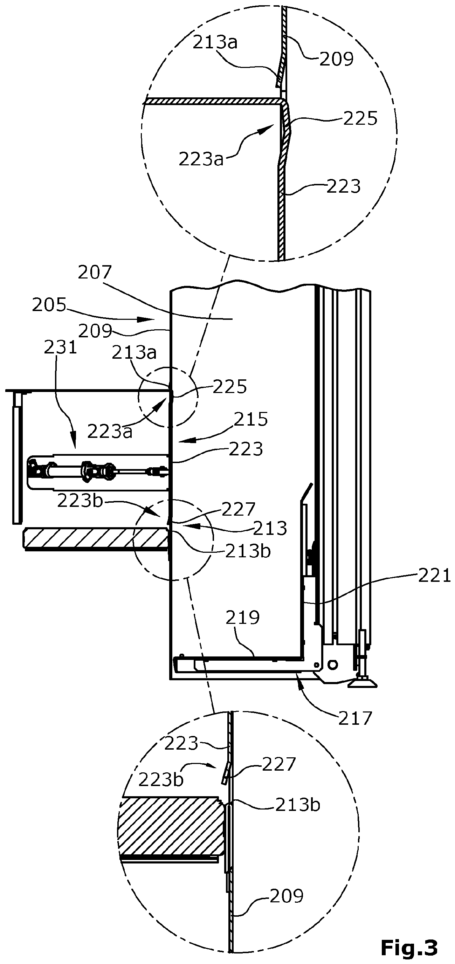

In Fig. 3 ist eine schematische Schnittdarstellung durch den Aufzugsschacht 205 dargestellt. Der Fahrkorb 217 ist in einer ersten Endstellung positioniert. Der Fahrkorb 217 weist einen Fahrkorbboden 219 zum Transport der Waren auf. Auf der der zweiten Wand 209 des Aufzugsschachts 205 gegenüberliegenden Seite des Fahrkorbbodens 219 weist der Fahrkorb 217 eine Seitenwand 221 auf. Dies ist notwendig, da der Aufzugsschacht 205 auf der der zweiten Wand 209 gegenüberliegenden Seite offen ist, so dass Wartungsarbeiten an dem Aufzugsschacht 205 auf einfache Art und Weise vorgenommen werden können. Mittels der Seitenwand 221 des Fahrkorbs 217 wird somit verhindert, dass an dieser offenen Seite des Aufzugsschachts 205 Waren aus dem Fahrkorb 217 fallen können.

Die von der Fördervorrichtung 145 transportierten Waren gelangen durch die Öffnung 213 in der zweiten Wand 209 auf den Fahrkorbboden 219. Der Schieber 215 kann in die in Fig. 3 dargestellte geschlossene Position fahren, so dass die Waren mittels des Schiebers 215 auf den Fahrkorbboden 219 geschoben werden.

Der Schieber 215 weist dazu eine Platte 223 auf, die in der geschlossenen Position des Schiebers 215 die Öffnung 213 verschließt. Dabei fluchtet die Platte 223 mit ihrer Hauptfläche mit der zweiten Wand 209 des Aufzugsschachts 205.

In dem oberen Seitenrand 223a weist die Platte 223 eine Abkantung 225 in Richtung des Innenraums des Aufzugsschachts 205 auf. An ihrem unteren Seitenrand 223b weist die Platte eine zweite Abkantung 227 auf, die in eine von dem Innenraum des Aufzugsschachts 205 abgewandte Richtung verläuft.

Die zweite Wand 209 und die Platte 223 des Schiebers 215 bilden zusammen mit den ersten Wänden 207 eine Führung für die mit dem Fahrkorb 217 transportierten Waren auf dem Weg nach oben. Durch die erste Abkantung 225 wird der obere Öffnungsrand 213a der Öffnung 213 abgeschirmt und Waren, die entlang der Platte 223 schleifen, werden in Richtung des Innenraums des Aufzugs 5 gedrückt und um den oberen Öffnungsrand 213a gelenkt. Dadurch wird verhindert, dass die Waren gegen den oberen Öffnungsrand 213a stoßen und verkanten können.

Durch die zweite Abkantung 227 wird verhindert, dass die Platte 223 des Schiebers 215 ein Hindernis bildet, an dem die Waren verkanten können. Die Waren werden somit durch den unteren Öffnungsrand 213b der Öffnung 213 an dem unteren Seitenrand 223b der Platte 223 vorbeigeführt.

Wie aus Fig. 3 hervorgeht, ist der Fahrkorb 217 L-förmig ausgebildet. Da der Aufzugsschacht 205 an drei Seiten verschlossen ist, sind neben der Seitenwand 221 weitere Seitenwände nicht notwendig, so dass der Fahrkorb 217 kostengünstig herstellbar ist.

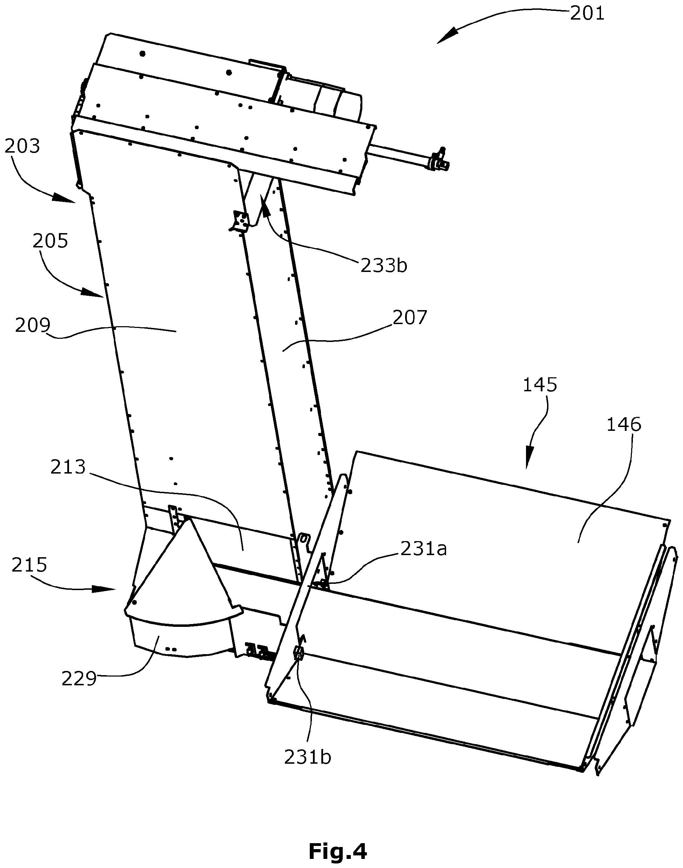

In Fig. 4 ist eine perspektivische Ansicht des erfindungsgemäßen Warenaufzugs 201 schematisch dargestellt. Die Öffnung 213 ist geöffnet, indem der Schieber 215 in eine geöffnete Stellung bewegt worden ist. Die Platte 223 des Schiebers 215 bildet in dieser Stellung eine Führungswand für Waren, die von der Fördervorrichtung 145 befördert werden. Der Warenaufzug 201 kann ferner eine nicht dargestellte Sperreinrichtung aufweisen, die eine Förderbewegung des Fahrkorbs 217 bei geöffneter Stellung des Schiebers 215 verhindert oder beschränkt. Dadurch wir ein Verletzungsrisiko des Benutzers bei der Wartung oder Reparatur reduziert. Die Sperreinrichtung kann beispielsweise durch Scharniere des Schiebers 215 gebildet sein, die in der geöffneten Stellung des Schiebers 215 über den Fahrkorbboden 219 ragen.

Es kann beispielsweise vorgesehen sein, dass eine an die Größe des Fahrkorbs 217 angepasste Warenmenge auf die Fördervorrichtung 145 gegeben wird. Diese befördert die Waren in Richtung des Warenaufzugs 201. Die Waren prallen gegen die schräg zu der Förderrichtung der Fördervorrichtung 145 angeordnete Platte 223 und werden von dieser durch die Öffnung 213 auf den Fahrkorb 217 bewegt. Nach einer vorgegebenen Zeit kann vorgesehen sein, dass der Schieber 215 in eine geschlossene Position bewegt wird und eventuell vor der Öffnung 213 liegende Waren durch die Öffnung 213 auf den Fahrkorb 217 schiebt.

Der Schieber 215 weist ferner eine gebogene Platte 229 auf, die sich an die Platte 223 anschließt. In der geschlossenen Stellung des Schiebers 215 verläuft die gebogene Platte 229 im Wesentlichen quer zu der Förderrichtung der Fördervorrichtung 145. Die gebogene Platte 229 bildet somit einen Anschlag für auf der Fördervorrichtung beförderte Waren, wie auch aus Fig. 2 ersichtlich ist. In dem Bereich des Schiebers 215 ist an der Fördervorrichtung 145 ferner eine zweite Seitenwand 147 angeordnet, die verhindert, dass gegen die gebogene Platte 229 stoßende Waren seitlich von der Fördervorrichtung 145 fallen können. Die Seitenwand 147 kann beispielsweise auch einen Öffnungsmechanismus besitzen, so dass ein Warenbypass gebildet wird. Die Waren können in der geschlossenen Stellung des Schiebers 215 mittels der gebogenen Platte 229 in den Warenbypass geleitet und können beispielsweise der Fördervorrichtung 145 wieder zugeführt werden.

Wie am besten aus Fig. 3 hervorgeht, wird der Schieber 215 über einen Antrieb 231 angetrieben. Der Antrieb 231 kann als Kolbenantrieb ausgebildet sein. An der Kolbenantriebsstange kann ein Sensor mit Wegaufnehmer angeordnet sein, der die Bewegung der Kolbenstange sensiert. Hierüber lässt sich die Position des Schiebers 215 bestimmen.

Wie in Fig. 4 ersichtlich ist, können verschiedene Sensoren 231a, 231b vorgesehen sein, die eine automatische Steuerung ermöglichen. Die Sensoren 231a, 231b können beispielsweise als Lichtschranke ausgebildet sein, wobei die Wirkungsrichtung der Lichtschranke durch entsprechende Pfeile dargestellt ist. Mittels des Sensors 231a kann beispielsweise festgestellt werden, ob Packungen falsch oder ungünstig an der Öffnung 213 liegen. Der Sensor 231b kann beispielsweise feststellen, wenn zu viele Packungen gegen den durch die gebogene Platte 229 gebildeten Anschlag befördert werden, so dass die Fördervorrichtung 145 gestoppt oder der Warenbypass geöffnet werden muss. Im normalen Betrieb kann grundsätzlich vorgesehen sein, dass die Fördervorrichtung 145 ununterbrochen läuft. Die Eingabe von Waren auf die Fördervorrichtung 145 kann dabei an die Fahrzeit des Fahrkorbs 217 des erfindungsgemäßen Warenaufzugs 201 angepasst sein.

Wenn mittels des Sensors 231a festgestellt wird, dass eine Ware innerhalb der Öffnung 213 liegt und nicht mittels der Schiebeplatte 223 auf den Fahrkorb 217 verschoben werden kann, kann eine automatische Steuerung vorgesehen sein, die eine Öffnung des Schiebers 215 und eine Rückwärtsbewegung der Fördervorrichtung 145 vorsieht. Eine Detektion einer ungünstig liegenden Ware kann zusätzlich zu dem Sensor 231a auch über die Positionsbestimmung des Schiebers 215 erfolgen. Wenn sich beispielsweise der Schieber 215 nicht vollständig in die geschlossene Stellung verfahren lässt, kann ebenfalls das zuvor beschrieben Steuerprogramm durchgeführt werden.

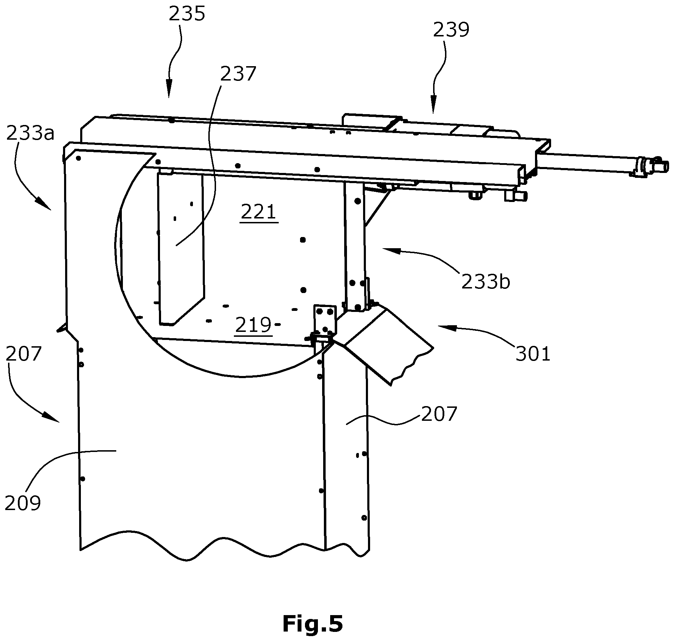

In Fig. 5 ist der obere Abschnitt des Aufzugsschachts 205 schematisch dargestellt, wobei die zweite Wand 209 aufgeschnitten gezeigt ist.

Der Fahrkorb 217 befindet sich in seiner oberen Endstellung. Dadurch, dass der Fahrkorb 217 L-förmig ausgebildet ist, sind die den ersten Wänden 207 zugewandten Seiten offen. In einer an die obere Endposition des Fahrkorbs 217 angepassten Position weisen die ersten Wände 207 eine erste Aussparung 233a und eine zweite Aussparung 233b auf. In der ersten Aussparung 233a ist ein zweiter Schieber 235 aufgenommen. Wenn der Fahrkorb 217 in die in Fig. 5 dargestellte obere Endstellung verfahren ist, kann der Schieber 235 über den Fahrkorbboden 219 bewegt werden und somit die von dem Fahrkorb 217 beförderten Waren in Richtung der zweiten Aussparung 233b und durch diese aus dem Aufzugsschacht 205 heraus bewegt werden. An die zweite Aussparung 233b anschließend ist die Handhabungsvorrichtung 301 der Warenübergabevorrichtung 110 angeordnet. In dem in Fig. 5 dargestellten Ausführungsbeispiel bildet diese einen ein Gefälle aufweisenden Transportkanal.

Der zweite Schieber 235 weist eine bewegbare Schiebeplatte 237 auf, die über einen Schieberantrieb 239 angetrieben ist. Der Schieberantrieb 239 kann so gesteuert sein, dass die Schiebeplatte 237 in einer vorgegebenen Zeit über den Fahrkorbboden 219 bewegt wird. Darüber kann in einem gewissen Maße eine Vereinzelung der Waren erfolgen. Alternativ kann vorgesehen sein, dass der Schieberantrieb 239 die Schiebeplatte 237 etappenweise antreibt, beispielsweise kann die Wegstrecke der Schiebeplatte 237 in drei Abschnitte aufgeteilt sein, die jeweils mit einer Pause unterteilt sind. Dadurch kann eine Unterportionierung der auf dem Fahrkorbboden 219 angeordneten Waren erfolgen.

Die Ausgestaltung des zweiten Schiebers kann bei einem erfindungsgemäßen Warenaufzug 201 auch unabhängig von dem Schieber 215 verwirklicht werden.

Der erfindungsgemäße Aufzug kann ferner nicht dargestellte Sensoren aufweisen, die die Endlagen des Fahrkorbs 217 detektieren. Hierüber können die Antriebe für den Schieber 215 und den zweiten Schieber 235 gesteuert werden.

Der erfindungsgemäße Warenaufzug 201 kann grundsätzlich auch in Warenübergabevorrichtungen vorgesehen sein, die eine andere Funktion als eine Annahme der Waren und Übergabe an ein Warenlager ausführen können. Beispielsweise kann der erfindungsgemäße Warenaufzug 201 auch in Warenübergabevorrichtungen eingesetzt werden, die an einer Ausgabeseite eines Warenlagers angeordnet sind. Auszugebende Waren werden somit in vergleichbarer Form in den Fahrkorb 217 befördert und zur endgültigen Ausgabe aus dem Warenlager mittels des zweiten Schiebers 235 geschoben.

## Patentansprüche

1. Warenaufzug (201) für eine Warenübergabevorrichtung (110) eines automatischen Warenlagers (100), zur Aufnahme von Waren von einer Fördervorrichtung (145) der Warenübergabevorrichtung (110) und Übergabe an eine vorzugsweise oberhalb der Fördervorrichtung (145) angeordneten Handhabungsvorrichtung (301) der Warenübergabevorrichtung (110),
mit einem Fahrkorb (217) mit einem Fahrkorbboden (219) zum Transport der Waren und mit einer Fahrkorbführung (203),
wobei ein Schieber (215) an einer Öffnung (213) in der Fahrkorbführung (203) angeordnet ist, über den auf der Fördervorrichtung (145) angeordnete Waren in den in einer ersten Endstellung positionierten Fahrkorb (217) schiebbar sind **dadurch gekennzeichnet, dass** der Schieber in einer geschlossenen Stellung des Schiebers (215) die Öffnung (213) in der Fahrkorbführung (203) zumindest teilweise verschließt.

2. Warenaufzug nach Anspruch 1, **dadurch gekennzeichnet, dass** der Schieber (215) in einer geöffneten Stellung des Schiebers (215) eine Führungswand für die von der Fördervorrichtung (145) geförderten Waren bildet.

3. Warenaufzug nach Anspruch 1 oder 2, **dadurch gekennzeichnet, dass** der Schieber (215) in einer geschlossenen Stellung des Schiebers (215) einen Anschlag für die von der Fördervorrichtung (145) geförderten Waren bildet.

4. Warenaufzug nach einem der Ansprüche 1 bis 3, **dadurch gekennzeichnet, dass** die Fahrkorbführung (203) einen Aufzugsschacht (205) aufweist, der durch mindestens zwei gegenüberliegende erste Wände (207) gebildet ist, wobei die Öffnung (213) zwischen ersten Wänden gebildet ist.

5. Warenaufzug nach einem der Ansprüche 1 bis 3, **dadurch gekennzeichnet, dass** die Fahrkorbführung (203) einen Aufzugsschacht (205) aufweist, der durch zwei gegenüberliegende erste Wände (207) und eine die ersten Wände verbindende zweite Wand (209) gebildet ist, wobei die Öffnung (213) in der zweiten Wand (209) angeordnet ist.

6. Warenaufzug nach einem der Ansprüche 1 bis 5, **dadurch gekennzeichnet, dass** der Schieber (215) eine Platte (223) aufweist, die in der geschlossenen Stellung des Schiebers (215) die Öffnung (213) in der Fahrkorbführung (203) zumindest teilweise verschließt.

7. Warenaufzug nach Anspruch 6, **dadurch gekennzeichnet, dass** die Platte (223) in der geschlossenen Stellung des Schiebers (215) mit der zweiten Wand (209) fluchtet, wobei die Platte (223) an ihrem oberen Seitenrand (223a) eine erste Abkantung (225) in Richtung des Innenraums des Aufzugsschachts (205) und/oder an ihrem unteren Seitenrand (223b) eine zweite Abkantung (227) in von dem Innenraum des Aufzugsschachts (205) abgewandter Richtung aufweist.

8. Warenaufzug nach einem der Ansprüche 1 bis 7, **dadurch gekennzeichnet, dass** der Schieber (215) über einen Antrieb (230) antreibbar ist.

9. Warenaufzug nach einem der Ansprüche 1 bis 8, **dadurch gekennzeichnet, dass** der Fahrkorb (217) eine Seitenwand (221) aufweist, wobei die Seitenwand (221) auf der von der Öffnung (213) der Fahrkorbführung (203) abgewandten Seite des Fahrkorbbodens (219) angeordnet ist.

10. Warenaufzug nach einem der Ansprüche 1 bis 9 **gekennzeichnet durch** einen zweiten Schieber (235), über den in einer zweiten Endstellung des Fahrkorbs (217) Waren zur Übergabe an die Handhabungsvorrichtung (301) schiebbar sind.

11. Warenaufzug nach Anspruch 10, **dadurch gekennzeichnet, dass** der zweite Schieber (235) eine über den Fahrkorbboden (219) bewegbare Schiebeplatte (237) aufweist.

12. Warenübergabevorrichtung (110) mit einem Warenaufzug (1) nach einem der Ansprüche 1 bis 11, vorzugsweise **gekennzeichnet, durch** eine Warenannahmeeinrichtung, wobei die Fördervorrichtung (145) Waren von der Warenannahmeeinrichtung zu dem Warenaufzug (201) befördert.

13. Warenübergabevorrichtung nach Anspruch 12, **dadurch gekennzeichnet, dass** die Handhabungsvorrichtung (301) eine Warenvereinzelungsvorrichtung ist.

14. Warenlager (100) mit einer Warenübergabevorrichtung (110) nach Anspruch 12 oder 13.

## Claims

1. A goods lift (201) for a goods transfer device (110) of an automatic goods storage system (100) for receiving goods from a conveying device (145) of the goods transfer device (110) and transferring them to handling device (301) of the goods transfer device (110), the handling device (301) preferably being arranged above the conveying device (145),
comprising a lift cage (217) having a lift cage bottom (219) for transport of the goods, and a lift cage guide (203),
wherein a pusher (215) is arranged at an opening (213) in the lift cage guide (203), said pusher (215) being adapted to push goods arranged on the conveyor device (145) into the lift cage (217) positioned in a first end position, **characterized in that**, in a closed position of the pusher (215), the pusher at least partially closes the opening (213) in the lift cage guide (203)

2. The goods lift according to claim 1, **characterized in that**, in an opened position of the pusher (215), the pusher (215) forms a guide wall for the goods conveyed by the conveyor device (145).

3. The goods lift according to claim 1 or 2, **characterized in that**, in a closed position of the pusher (215), the pusher (215) forms a stopper for the goods conveyed by the conveyor device (145).

4. The goods lift according to any one of claims 1 to 3, **characterized in that** the lift cage guide (203) comprises a lift shaft (205) formed by at least two mutually opposite first walls (207), wherein the opening (213) is formed between said first walls.

5. The goods lift according to any one of claims 1 to 3, **characterized in that** the lift cage guide (203) comprises a lift shaft (205) formed by two mutually opposite first walls (207) and by a second wall (209) connecting the first walls, wherein the opening (213) is arranged in the second wall (209).

6. The goods lift according to any one of claims 1 to 5, **characterized in that** the pusher (215) comprises a plate (223) which in the closed position of the pusher (215) at least partially closes the opening (213) in the lift cage guide (203).

7. The goods lift according to claim 6, **characterized in that**, in the closed position of the pusher (215), said plate (223) is in alignment with the second wall (209), wherein the plate (223) on its upper side edge (223a) comprises a first chamfer (225) in the direction of the interior of the lift shaft (205) and/or on its lower side edge (223a) comprises a second chamfer (227) in the direction facing away from the interior of the lift shaft (205).

8. The goods lift according to any one of claims 1 to 7, **characterized in that** the pusher (215) can be driven by a drive unit (230).

9. The goods lift according to any one of claims 1 to 8, **characterized in that** the lift cage (217) comprises a side wall (221), said side wall (221) being arranged on the side of the lift cage bottom (219) facing away from the opening (213) of the lift cage guide (203).

10. The goods lift according to any one of claims 1 to 9, **characterized by** a second pusher (235) by which, in a second end position of the lift cage (217), goods can be pushed for transfer to the handling device (301).

11. The goods lift according to claim 10, **characterized in that** said second pusher (235) comprises a pusher plate (237) which is moveable across the lift cage bottom (219).

12. A goods transfer device (110) with a goods lift (1) according to any one of claims 1 to 11, preferably **characterized by** a goods receiving device, the conveying device (145) conveying goods from the goods receiving device to the goods lift (201).

13. The goods transfer device according to claim 12, **characterized in that** the handling device (301) is a goods separating device.

14. A goods storage system (100) with a goods transfer device (110) according to claim 12 or 13.

## Revendications

1. Monte-charge (201) pour dispositif de transfert de marchandises (110) d'un entrepôt automatisé (100), destiné à la réception de marchandises depuis un dispositif convoyeur (145) du dispositif de transfert de marchandises (110) et au transfert à un dispositif de manutention (301) du dispositif de transfert de marchandises (110), de préférence disposé au-dessus du dispositif convoyeur (145),
doté d'une cabine (217) avec un plancher de cabine (219) destiné au transport des marchandises et avec une glissière de cabine (203),
dans lequel un coulisseau (215) est disposé sur une ouverture (213) dans la glissière de cabine (203), lequel peut faire coulisser des marchandises disposées sur le dispositif convoyeur (145) dans la cabine (217) positionnée dans une première position de fin de course, **caractérisé en ce que** le coulisseau (215) ferme au moins partiellement l'ouverture (213) dans la glissière de cabine (203) dans une position fermée du coulisseau (215) .

2. Monte-charge selon la revendication 1, **caractérisé en ce que** le coulisseau (215) forme une paroi de guidage pour les marchandises convoyées par le dispositif convoyeur (145) dans une position ouverte du coulisseau (215).

3. Monte-charge selon la revendication 1 ou 2, **caractérisé en ce que** le coulisseau (215) forme une butée pour les marchandises convoyées par le dispositif convoyeur (145) dans une position fermée du coulisseau (215) .

4. Monte-charge selon l'une des revendications 1 à 3, **caractérisé en ce que** la glissière de cabine (203) comporte une cage d'ascenseur (205), laquelle est formée par au moins deux premières parois (207) opposées l'une à l'autre, dans lequel l'ouverture (213) est formée entre des premières parois.

5. Monte-charge selon l'une des revendications 1 à 3, **caractérisé en ce que** la glissière de cabine (203) comporte une cage d'ascenseur (205), laquelle est formée par deux premières parois (207) opposées l'une à l'autre et une deuxième paroi (209) reliant les premières parois, dans lequel l'ouverture (213) est disposée dans la deuxième paroi (209).

6. Monte-charge selon l'une des revendications 1 à 5, **caractérisé en ce que** le coulisseau (215) comporte une plaque (223), laquelle ferme au moins partiellement l'ouverture (213) dans la glissière de cabine (203) dans la position fermée du coulisseau (215).

7. Monte-charge selon la revendication 6, **caractérisé en ce que** la plaque (223) est alignée avec la deuxième paroi (209) dans la position fermée du coulisseau (215), dans lequel la plaque (223) comporte sur son bord latéral supérieur (223a) un premier pli (225) dans la direction de l'espace intérieur de la cage d'ascenseur (205) et/ou comporte sur son bord latéral inférieur (223b) un deuxième pli (227) dans la direction se détournant de l'espace intérieur de la cage d'ascenseur (205).

8. Monte-charge selon l'une des revendications 1 à 7, **caractérisé en ce que** le coulisseau (215) est entraînable par le biais d'un entraînement (230).

9. Monte-charge selon l'une des revendications 1 à 8, **caractérisé en ce que** la cabine (217) comporte une paroi latérale (221), dans lequel la paroi latérale (221) est disposée sur le côté du plancher de cabine (219) se détournant de l'ouverture (213) de la glissière de cabine (203) .

10. Monte-charge selon l'une des revendications 1 à 9, **caractérisé par** un deuxième coulisseau (235), lequel peut faire coulisser des marchandises pour transfert au dispositif de manutention (301) dans une deuxième position de fin de course de la cabine (217).

11. Monte-charge selon la revendication 10, **caractérisé en ce que** le deuxième coulisseau (235) comporte une plaque coulissante (237) déplaçable au-dessus du plancher de cabine (219).

12. Dispositif de transfert de marchandises (110) doté d'un monte-charge (1) selon l'une des revendications 1 à 11, de préférence **caractérisé par** une installation d'admission de marchandises, dans lequel le dispositif convoyeur (145) convoie des marchandises de l'installation d'admission de marchandises au monte-charge (201).

13. Dispositif de transfert de marchandises selon la revendication 12, **caractérisé en ce que** le dispositif de manutention (301) est un dispositif d'individualisation.

14. Entrepôt (100) doté d'un dispositif de transfert de marchandises (110) selon la revendication 12 ou 13.
